# EUROPEAN PATENT APPLICATION

(11) **EP 4 793 133 A1**
(43) Date of publication of application: **19.08.2026**
(21) Application number: 26158524.4
(22) Date of filing: 13.02.2026
(51) Int. Cl.: B62D 1/04, B60K 20/06, F16H 59/02, B60K 35/10

(54) **MOTOR VEHICLE WITH INNOVATIVE STEERING ASSEMBLY AND STEERING WHEEL THEREOF**

(30) Priority: 14.02.2025 IT 202500002907
(71) Applicant: FERRARI S.p.A., 41100 Modena (IT)
(72) Inventor: LOPES FURTADO, Jason, 41100 MODENA (IT); BARATELLI, Andrea, 41100 MODENA (IT); COMETTI, Valerio, 41100 MODENA (IT); FURBETTA, Erik, 41100 MODENA (IT); MAIOGLU, Dimitrios, 41100 MODENA (IT)
(74) Representative: Studio Torta S.p.A.

(57) **Abstract**

A steering wheel (12) for a motor vehicle (1) has a control portion (14) rotatable about a steering wheel axis (A) and a control paddle (70) to control a function of the motor vehicle, wherein the control portion (14) is axially delimited between a back wall (15) and a front wall (16) opposite each other according to the steering wheel axis (A), characterized by comprising a slide (72) slidable between a first and a second position on a guide (71) defined by the back wall (15), wherein the control paddle (70) in the first position of the slide is at least partially inserted in a seat (73) of the back wall and has a first face (70a) facing a bottom (75) of the seat according to the steering wheel axis and a second face (70b) opposite the first face according to the steering wheel axis and arranged at least partially flush with an outer surface (77) of the back wall, so as to blend in with the back wall, as well as for the possible remaining part hidden by the back wall inside the seat (73), or entirely hidden by the back wall (15), wherein the control paddle (70) in the second position of the slide is at least partially extracted from the seat (73) and free to rotate.

## Description

### CROSS-REFERENCE TO RELATED APPLICATIONS

This patent application claims priority from Italian patent application no. 102025000002907 filed on February 14, 2025, the entire disclosure of which is incorporated herein by reference.

### TECHNICAL FIELD

The invention generally relates to the field of motor vehicles and more in particular to a steering assembly and/or a steering wheel, for example being part of the steering assembly.

### PRIOR ART

As is known, motor vehicles usually have a steering assembly which includes a steering wheel rotatable about a steering wheel axis with respect to an outer casing of the steering assembly.

The steering assembly is typically located inside a cockpit of the motor vehicle, at a sitting area for a driver of the motor vehicle.

The rotation of the steering wheel imposes the steering angle of the wheels of the motor vehicle, for example by means of a purely mechanical transmission or by emitting electrical signals associated with the rotation of the steering wheel and processed by an actuation assembly configured to set the steering angle as a function of the same signals (solutions called "steer-by-wire").

The outer casing can be fixed with respect to the body of the motor vehicle or be adjustable in position and orientation with respect to the body.

In general, the need is felt to revolutionize the known steering assemblies, in particular in terms of the possibility of adjusting their position and coupling to the body, while maintaining an attractive appearance and intuitive usability.

Furthermore, the need is also felt to arrange the steering assembly in the cockpit in a more convenient manner, for example to offer more space for the driver when the steering assembly is not in use or more comfort, in general, for the driver.

An object of the invention is to satisfy at least one of the needs set forth above, preferably in a simple and safe manner.

### DESCRIPTION OF THE INVENTION

The object is achieved by the invention, as defined in claim 1.

The dependent claims set forth particular embodiments of the invention.

### BRIEF DESCRIPTION OF THE DRAWINGS

In the following, embodiments of the invention are described for a better understanding of the same by way of non-limiting examples and with reference to the accompanying drawings wherein:
- Figures 1A, 1B are perspective views of the inside of a cockpit of a motor vehicle, according to an embodiment of the invention, with respective distinct configurations of a steering wheel,
- Figure 1C is similar to Figures 1A, 1B, with the steering wheel removed for clarity,
- Figure 2 is an enlarged view of a portion of Figure 1A,
- Figure 3 is a top view of the steering wheel in a use configuration,

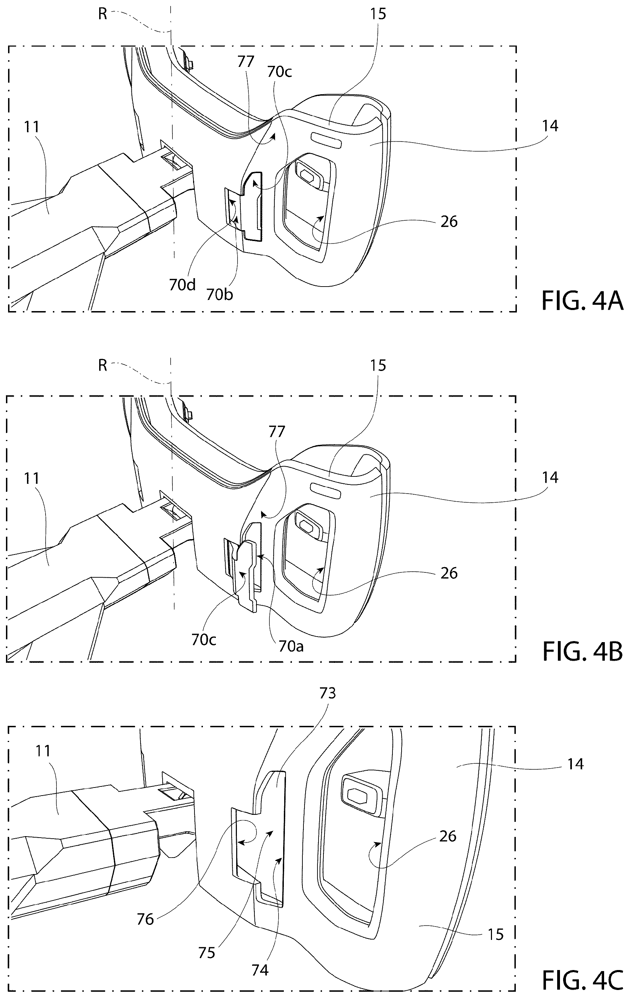

- Figures 4A, 4B are rear perspective views of the steering wheel, with parts removed for clarity, with a gearshift paddle according to a retracted configuration and an extracted configuration, respectively,
- Figure 4C is similar to Figures 4A, 4B, with a slightly enlarged scale and with the paddle removed for clarity,
- Figures 5A, 5B are perspective views of the steering wheel suspended by an articulated mechanism according to respective distinct configurations,

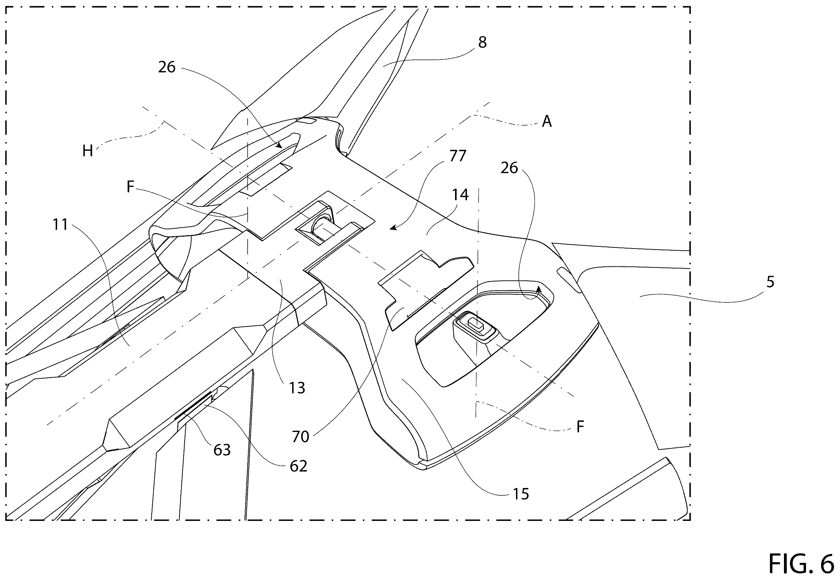

- Figures 6, 7 are enlarged views, according to distinct perspective points of view, and with parts removed for clarity, of a portion of Figure 1B,

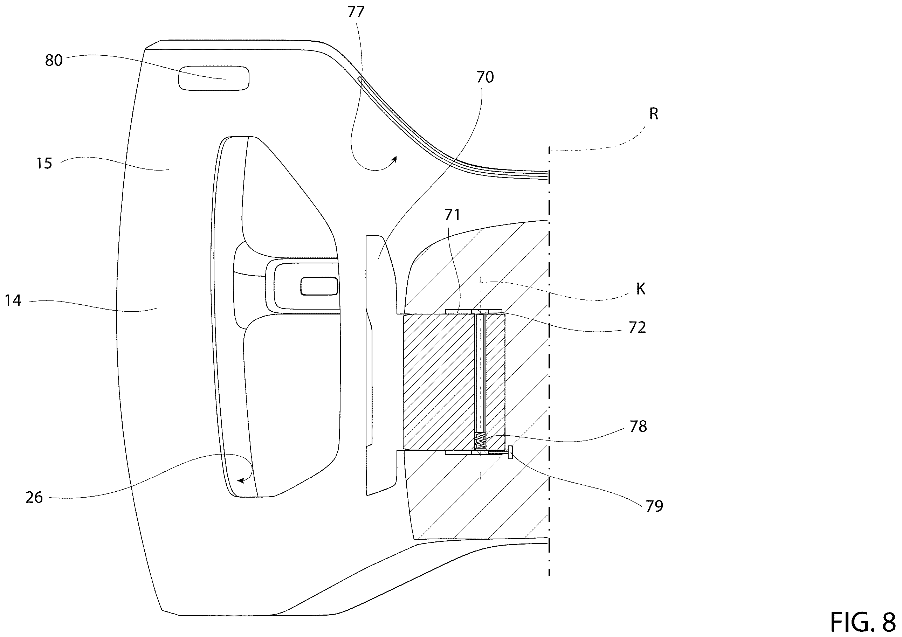

- Figure 8 is a half section of the steering wheel according to a horizontal section plane when the steering wheel is in the use configuration, and
- Figures 9, 10 are conceptual diagrams of mechanisms coupled to the steering wheel.

### EMBODIMENTS OF THE INVENTION

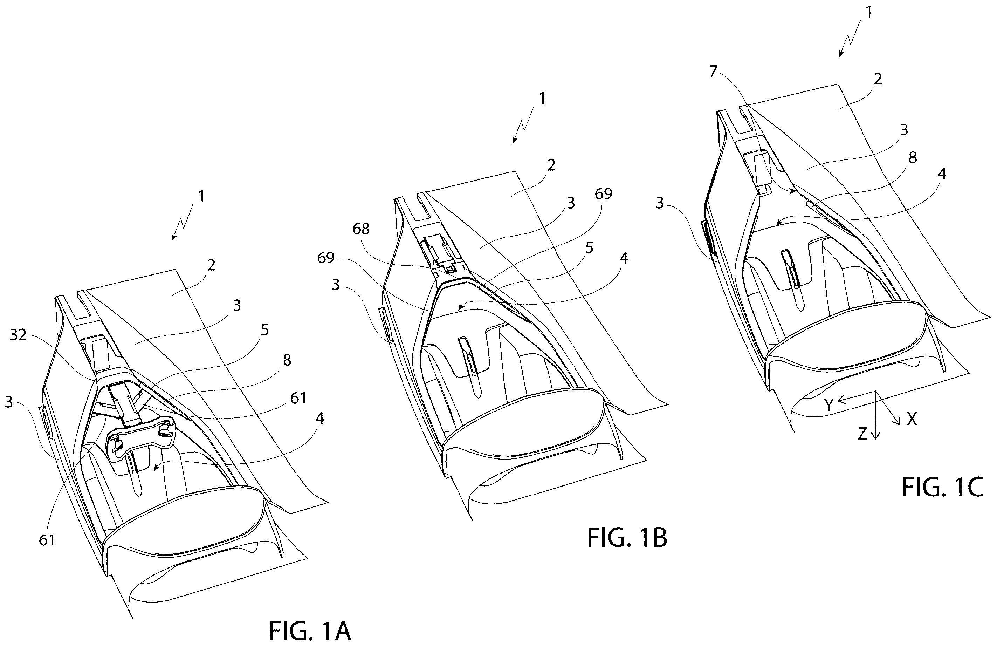

In Figure 1, reference numeral 1 is used to indicate, as a whole, a motor vehicle.

As all motor vehicles, the motor vehicle 1 has a roll axis X, a pitch axis Y, and a yaw axis Z. The roll axis X coincides with or is parallel to a direction of advancement or longitudinal axis of the motor vehicle 1. The pitch axis Y is horizontal and orthogonal to the roll axis X. The yaw axis Z completes with the axes X, Y a set of three Cartesian axes fixed to the motor vehicle 1, therefore it is orthogonal to both axes X, Y and thus has at least one vertical component.

From here on, expressions such as horizontal, vertical, lateral, sideways, high, low, above, below, and the like, refer to the normal conditions of use of the motor vehicle 1.

Similarly, expressions such as front, back, in front, behind, at the front, at the back, and the like, refer to the direction of advancement of the motor vehicle 1.

The motor vehicle 1 comprises a body 2, in particular comprising, as it normally occurs in motor vehicles, a chassis defining the structural frame of the motor vehicle 1, and a bodywork carried by the chassis and defining the exterior surfaces of the motor vehicle 1.

The body 2 comprises a plurality of cockpit walls 3 defining a cockpit or passenger compartment 4 for accommodating a driver of the motor vehicle 1. In particular, the cockpit walls 3 define the contours or boundaries of the cockpit 4 or a shell that circumscribes the cockpit 4. In other words, the cockpit walls 3 directly face the volume of the cockpit 4.

The expression cockpit wall 3 can be interpreted in a broad manner, more specifically so as to comprise one or more of sheets of the bodywork, parts of the chassis, shelves, ribs, various protrusions, coverings or interior finishing elements, appendages, handrails, etcetera, for example made of any material, such as metal, plastic, composites (e.g. carbon fiber), etcetera.

Preferably, the body 2 comprises further cockpit walls, not illustrated, distinct from the cockpit walls 3 and defining a further cockpit, for example symmetrical or identical to the cockpit 4; therefore, the graphic representation of the further cockpit is superfluous, as it is, for example, identical to the cockpit 4. The further cockpit is, for example, placed next to the cockpit 4 according to the pitch axis Y. In the following, what is described for the cockpit 4 and for the components housed therein will also be applicable to the further cockpit.

Inside the cockpit 4, the motor vehicle 1 preferably comprises a dashboard panel or fascia 5 fixed with respect to the cockpit walls 3. In general, the fascia 5 could be considered as one of the cockpit walls 3.

In greater detail, the fascia 5 has or is a panel which extends, according to the roll axis X, from a front end of the cockpit 4 towards the rear, namely towards the driver during the use of the motor vehicle 1. Alternatively or additionally, the fascia 5 has at least one portion that extends across the entire width of the cockpit 4 according to the pitch axis Y, or comprises two panels that extend according to the pitch axis Y from the side ends or boundaries of the cockpit 4 towards the center, for example without ever meeting or meeting only at respective front ends of the panels according to the roll axis X; in this manner, the fascia 5 connects, at its side ends 5a, 5b opposite each other according to the axis Y, to respective side walls 3a, 3b of the cockpit walls 3. Conveniently, the fascia 5 is arranged at approximately halfway up the cockpit 4, according to the yaw axis Z.

The fascia 5 is not to be restrictively understood as a flat or single panel, but can comprise several interconnected panel portions, just as it can have convex parts and concave parts, without any loss of generality.

In particular, or also in general, the side walls 3a, 3b define the respective side ends or boundaries, opposite each other according to the axis Y, of the cockpit 4.

More generally, the fascia 5, the side walls 3a, 3b, and possibly other cockpit walls 3, form or are part of a wall unit, which preferably extends at least partially inside the cockpit 4, for example dividing the cockpit 4 into several communicating volumes. For example, at least one portion of the wall unit (the portion being, for example, defined by the fascia 5 or comprising the fascia 5) can cover from above one or more volumes of the cockpit 4 (i.e. can face these volumes downwards) and/or face other volumes of the cockpit 4 upwards.

Each of the above-mentioned volumes is, in particular, a habitable volume, in the sense that it is directly reachable, namely more in particular without moving or removing panels or bodies inside the cockpit 4, by the driver accommodated in the cockpit 4 with his/her limbs.

The side walls 3a, 3b can be components independent of the fascia 5, which could even be absent, and preferably extend longitudinally according to the roll axis X towards a front portion or end of the motor vehicle 1 in a convergent manner (from the rear to the front) with respect to each other according to the pitch axis Y.

Preferably, the side walls 3a, 3b define or delimit between them, according to the pitch axis Y, a cavity or opening 6 having a funnel or convergent or tapered shape towards the front portion or end.

More precisely, on a section plane horizontal or parallel to a plane defined by the axes X, Y, the side walls 3a, 3b trace respective profiles that delimit between them, according to the pitch axis Y, an opening 7 (herein specifically planar, i.e. on the section plane) with the funnel or convergent or tapered shape.

In particular, the funnel or convergent or tapered shape of the cavity 6 or the opening 7 can have a more rearward zone 7a strictly convergent and/or end at the front with an alcove 7b of the wall unit or the fascia 5. In the illustrated specific embodiment, the alcove 7b is delimited by parallel sections (in particular to the roll axis X) of the side walls 3a, 3b or their profiles.

For example, the alcove 7b is delimited at the front by a front end or boundary of the cockpit 4.

The alcove 7b or the volume below the alcove 7b can house the pedals P (brake pedal or accelerator pedal) for driving the motor vehicle 1.

The more rearward zone 7a can house a seat for the driver; the seat could also be directly defined by the cockpit walls 3 (as is illustrated) or be coupled to the cockpit walls 3 in a fixed manner or adjustable in position and/or orientation with respect to the cockpit walls 3.

In general, independently of what set forth above or in combination with what set forth above, the opening 7 or the cavity 6 is defined by the wall unit or the fascia 5 and can have generic shapes. For example, the opening 7 or the cavity 6 is delimited laterally (according to the pitch axis Y) by two delimitation portions 8 of the wall unit, namely more in particular of the side walls 3a, 3b or the fascia 5, for example comprising respective side protrusions or shelves (extending from the side sides or ends, namely from the side walls 3a, 3b, respectively, towards the center of the cockpit 4), for example of the fascia 5 or the side walls 3a, 3b or more generally of the cockpit walls 3.

In other words, the opening 7 or the cavity 6 is or comprises a recess of the fascia 5 according to a direction parallel to the roll axis X, the recess being in particular delimited laterally, at its side ends, by the delimitation portions 8, herein for example being part of the fascia 5.

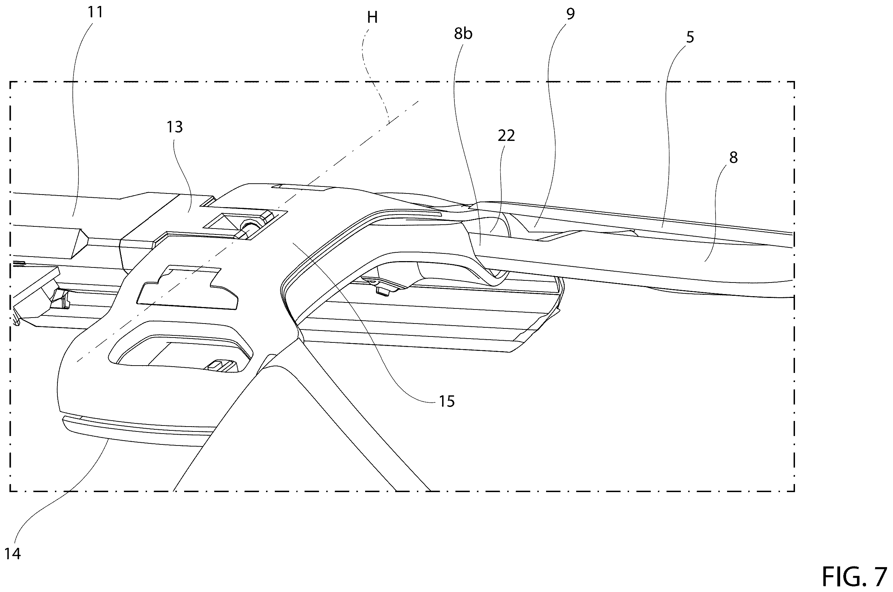

Immediately above or below one or each of the delimitation portions, there can be a corresponding air outlet 9 (Figure 7) obtained on the wall unit, namely more in particular on a cockpit wall 3 (specifically one of the side walls 3a, 3b) or on the fascia 5.

For clarity, strictly convergent means that the side walls 3a, 3b have a relative distance according to the pitch axis Y which always decreases (exactly, in a strictly decreasing manner) towards the front end, whereas convergent means that the relative distance can decrease as well as remain constant towards the front end for one or more longitudinal sections, without anyway increasing (exactly, in a decreasing manner).

The motor vehicle 1 comprises a steering assembly 10 housed in the cockpit 4. A second steering assembly 10 is preferably present also in the further cockpit, so that each of the cockpits can be chosen by the driver for driving the motor vehicle 1 by means of the relative steering assembly 10 while the other steering assembly 10 is not in use. Therefore, the cockpit not utilized by the driver can be used for accommodating a passenger.

The steering assembly 10 comprises an outer casing or support case 11 coupled to the cockpit walls 3.

The steering assembly 10 and/or more generally the motor vehicle 1 further comprise a steering wheel 12.

The steering wheel 12 has or comprises a steering wheel shaft 13 extending along a steering wheel axis A. The steering wheel shaft 13 is couplable and herein more specifically coupled to the outer casing 11, in particular in a rotatable manner about the steering wheel axis A, more in particular with respect to the outer casing 11.

Clearly, the rotation of the steering wheel shaft 13 with respect to the outer casing 11 could be lockable, for example by means of a steering lock device, which could be known per se and therefore is not described in detail.

The steering wheel 12 further has or comprises a control portion 14 (namely the wheel of the steering wheel 12), which is manoeuvrable by the driver and is coupled to the steering wheel shaft 13.

With respect to the steering wheel shaft 13, the control portion 14 has or can have at least one use configuration, in which it is rotatable (in particular about the steering wheel axis A) to drive the steering wheel shaft 13 into rotation about the steering wheel axis A, in particular with respect to the outer casing 11. For example, the steering wheel axis A passes through a center of the control portion 14 in the use configuration.

More in detail, the control portion 14 in the use configuration is rotatable together with the steering wheel shaft 13, namely is rotationally fixed to the steering wheel shaft 13, about the steering wheel axis A.

In the use configuration of the control portion 14, if the steering assembly 10 were in a suitable configuration (as it will be clear in the following), the steering assembly 10 would be operable to steer the motor vehicle by means of a rotation of the control portion 14 (corresponding to a rotation of the steering wheel shaft 13) about the steering wheel axis A.

For example, the steering assembly 10 can comprise a sensor device (not illustrated) configured to detect the rotation of the control portion 14 or the steering wheel shaft 13, and to emit a corresponding signal indicative of the detected rotation. Therefore, a steering actuation device (not illustrated), being part of the motor vehicle 1, can receive the signal and control the steering of the motor vehicle 1 in a manner corresponding to the received signal (the steering actuation device is therefore preferably of the steer-by-wire type).

In the use configuration, the control portion 14 preferably protrudes radially with respect to the steering wheel shaft 13. Alternatively or additionally, the control portion 14 in the use configuration is at least partially arranged at the back of the steering wheel shaft 13.

Preferably, the control portion 14 in the use configuration has a back wall 15 (front or arranged to be faced towards the front end of the motor vehicle 1) and a front wall 16 (rear or arranged to be faced towards the rear of the motor vehicle 1 or towards the driver). The back wall 15 and the front wall 16 are opposite each other according to the steering wheel axis A in the use configuration.

For example, in the use configuration, the back wall 15 and the front wall 16 axially (i.e. according to the steering wheel axis A in the use configuration) delimit the control portion 14, namely define the ends or the opposite axial boundaries of the control portion 14.

Preferably, the back wall 15 is arranged to be axially (i.e. according to the steering wheel axis A in the use configuration) closer than the front wall 16 to the outer casing 11.

Preferably, the control portion 14 in the use configuration has a radial end 17 according to a radial direction R with respect to the steering wheel axis A. The radial end 17 is axially arranged between the back wall 15 and the front wall 16.

Advantageously, the radial end 17 has a recess 18 extending along the direction R and sandwiched between the back wall 15 and the front wall 16. In other words, the radial end 17 is radially open and defines the recess 18 exposed to the outside of the control portion 14 or open towards the outside of the control portion 14. Still in other words, the recess 18 between the back wall 15 and the front wall 16 defines an inner cavity of the control portion 14 radially open towards the outside of the control portion 14 or radially communicating with the outside of the control portion 14.

In particular, the recess 18 defines or is part of a channel 20 passing through the control portion 14 along the direction R from the radial end 17 to a radial end diametrically opposite the radial end 17 according to the direction R.

In practice, in the illustrated embodiment, the back wall 15 and the front wall 16 comprise two respective plates axially facing each other and fixed to each other by means of axial connecting elements 19 (for example one or more of pins or spacers, bolts, screws, rivets, male elements protruding from one of the plates and fitted onto female elements on the other of the plates, and the like) axially interposed between the plates, in any case so as to leave the channel 20 passing radially from side to side (from the radial end 17 to the diametrically opposite radial end) of the control portion 14 free.

Independently, the control portion 14 has two ends 21 diametrically opposite each other according to a further radial direction D (with respect to the steering wheel axis A in the use configuration), which in the illustrated specific embodiment, although this is not necessary, is orthogonal or more generally transversal to the radial direction R. The ends 21 have respective holes 22, in particular through holes, along relative directions parallel to each other (specifically parallel to the axis R) and orthogonal both to the direction D, and to the steering wheel axis A in the use configuration.

Conveniently, the control portion 14 in the use configuration has at least one (angular, with respect to the steering wheel axis A) neutral position corresponding to zero steering of the motor vehicle 1.

The direction R and/or the directions of the holes 22 are directed substantially vertically or parallel to the yaw axis Z in the neutral position. Furthermore, the recess 18 and/or the holes 22 are in particular arranged at the highest side (according to the yaw axis) of the control portion 14 in the neutral position.

The direction D is directed substantially horizontally or parallel to the pitch axis Y in the neutral position.

Preferably, the steering wheel 12 can comprise one or more controls 23 configured to control respective functions of the motor vehicle 1 (for example one or more of a car radio set, an attitude of the suspensions, an air conditioning apparatus, and the like) and arranged inside the recess 18 to be operable by the driver through the recess 18.

Alternatively or additionally, the steering wheel 12 can comprise a display 24, for example of a human-machine interface or of an entertainment content viewing device (e.g. images, videos, games, etcetera), arranged inside the recess 18 to be visible to the driver through the recess 18.

Alternatively or additionally, the steering wheel 12 can comprise a lighting device 25, for example comprising a plurality of LEDs, configured to illuminate the inside of the recess 18, thereby consequently highlighting in particular the recess 18 to the driver. For example, the lighting device 25 can be at least partially or completely arranged inside the recess 18.

Preferably, the steering wheel 12 can comprise a lighting device provided with a light guide 68 exposed towards the outside of the steering wheel 12 or the cockpit 4 at the radial end 17 and more in particular on the back wall 15. The latter lighting device with the light guide 68 is configured for example to emit light towards the driver in the cockpit 4, in particular parallel to the direction R, through the light guide 68.

Preferably, the control portion 14 further comprises one or more (precisely two) slots 26 passing from the front wall 16 to the back wall 15 (axially from side to side of the control portion 14) along respective directions F parallel to the steering wheel axis A in the use configuration. The slots 26 are arranged in particular to allow the driver to grip the control portion 14 at the slots 26, in particular passing the fingers through the slots 26 and closing the fingers on the control portion 14 at the slots 26.

For example, the recess 18 is arranged between the slots 26 according to the direction D or more generally according to a radial direction with respect to the steering wheel axis A in the use configuration and transversal to the direction R.

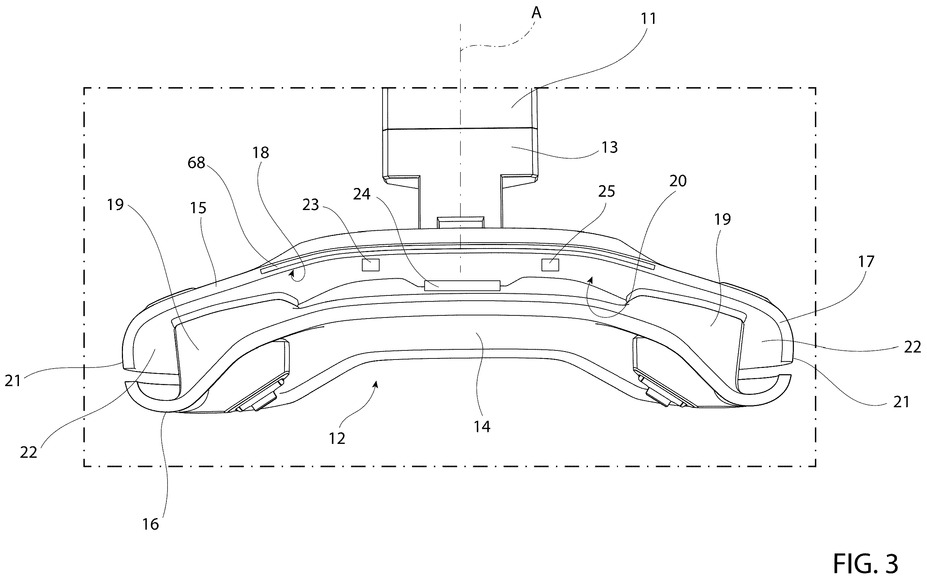

According to a possible non-limiting aspect, in light of Figure 3, as well as for example of the foregoing, it follows in a direct and unambiguous manner that the recess 18 is adapted to receive on its inside at least a portion of the hands and/or e.g. the fingers of the driver.

Advantageously, the control portion 14 is configurable with respect to the steering wheel shaft 13 in a rest configuration distinct from the use configuration.

For example, the control portion 14 is hinged with respect to the steering wheel shaft 13 about a hinge axis H orthogonal to the steering wheel axis A, so as to be rotatable about the hinge axis H with respect to the steering wheel shaft 13 between the use configuration and the rest configuration.

In particular, the hinge axis H is parallel to the pitch axis Y in the neutral position of the control portion 14.

Specifically, for example, the control portion 14 passes from the use configuration to the rest configuration and vice versa with a rotation about the hinge axis H substantially by a right angle.

Preferably, the direction R becomes parallel to or aligned with the steering wheel axis A in the rest configuration.

In particular, the hinge axis H is transversal or orthogonal to the direction R, more in particular in the use configuration.

Preferably, the direction D is substantially parallel to the hinge axis H.

Advantageously, the motor vehicle 1 comprises a mechanism 30 controllable to reconfigure the steering assembly 10 (which optionally includes the steering wheel 12) and/or the steering wheel 12 between a first and a second configuration, specifically but not necessarily defined by an extracted configuration and a retracted configuration.

In the extracted configuration or first configuration, the control portion 14 is configurable or configured in the use configuration. In this manner, the steering assembly 10 is made operable to steer the motor vehicle 1 by means of the rotation of the control portion 14.

In particular, in the extracted configuration, the steering assembly 10 or the outer casing 11 or the steering wheel 12 is arranged at the back or further back according to the roll axis X with respect to the retracted configuration, i.e. closer to the driver accommodated in the cockpit 4.

For example, the steering assembly 10 or the outer casing 11 could have the same height with respect to the yaw axis Z, as in the illustrated embodiment, or a different height. The same could be valid independently for the position according to the pitch axis Y.

In the retracted configuration or second configuration (Figure 1B), with the control portion 14 in the rest configuration, the control portion 14 has a steering wheel wall, in particular defined by at least one of the back wall 15 and the front wall 16 (for example, the back wall 15), which (the steering wheel wall) is arranged flush, in particular at least along a direction parallel to the pitch axis Y, with the wall unit and/or so as to appear or be integrated with the wall unit or to blend in with the wall unit. Specifically, both the back wall 15, and the front wall 16 are arranged flush, in particular at least along a direction parallel to the pitch axis Y, with respective parts of the wall unit and/or so as to appear or be integrated with the respective parts of the wall unit or to blend in with the respective parts of the wall unit.

In this description, the back wall 15 and/or the front wall 16 may always be generalized to the generic steering wheel wall, which may also not coincide with either the back wall 15 or the front wall 16, or may comprise one or both of the back wall 15 and the front wall 16. For example, in other embodiments not illustrated, the steering wheel wall could be a wall axially intermediate between the back wall and the front wall.

Beyond the specifically illustrated embodiment, for example, the mechanism 30 could, in other examples, also only be defined by a hinge, namely the hinge by means of which the control portion 14 is hinged to the steering wheel shaft 13. Here, for example, the first configuration would coincide with the use configuration and the second configuration would coincide with the rest configuration.

Therefore, the control portion 14 in the first configuration has at least the use configuration, whereas in the second configuration it has at least the rest configuration.

Being arranged flush with the wall unit substantially means (i.e. is a concept replaceable by the following) being arranged close to and/or, more in particular, in continuity with the wall unit or its exposed surfaces in the cockpit 4, thereby in particular merging into or camouflaging with or integrating with (at least to the eye, in particular the human eye, but not necessarily also mechanically) the wall unit or its exposed surfaces in the cockpit 4.

For example, in the retracted configuration or second configuration, with the control portion 14 in the rest configuration, the control portion 14 or the steering wheel wall could rest against the wall unit and/or be supported by the wall unit and/or be in contact with the wall unit.

For example, in the retracted configuration or second configuration, with the control portion 14 in the rest configuration, an empty (free) space between the control portion 14 or the steering wheel wall and the wall unit does not exist or is absent at least according to the pitch axis Y (or possibly also according to the roll axis X and/or the yaw axis Z, according to other embodiments), therefore, in other words, the control portion 14 or the steering wheel wall connects, in particular seamlessly or with substantial continuity (at least to the eye, in particular the human eye) to the wall unit or to its exposed surfaces in the cockpit 4.

More in detail, the steering wheel wall or the control portion 14 closes, occupies, or hides, or still more generally covers, at least one portion or even the entire cavity 6 or opening 7 defined by the wall unit, when the steering assembly 10 is in the retracted configuration with the control portion 14 in the rest configuration.

From here on, the description will refer to the extracted and retracted configurations of the steering assembly 10, although they can always be generalized to the first and second configurations, respectively.

In particular, the steering wheel wall or more generally the entire control portion 14 has a shape complementary, at least along a dimension according to a direction parallel to the pitch axis Y (and also possibly along a dimension according to a direction parallel to the yaw axis Z or the roll axis X, or along all the dimensions), to the closed, hidden or occupied portion of the cavity 6 or opening 7.

Preferably, in the retracted configuration with the control portion 14 in the rest configuration, the back wall 15 and the front wall 16 (or vice versa, according to other embodiments), are faced, in particular respectively, in an opposite manner, in particular upwards and downwards according to the yaw axis Z. Specifically, although not necessarily, the back wall 15 and the front wall 16 extend in a manner substantially orthogonal to the axis Z in the rest configuration of the control portion 14.

Alternatively or additionally, the back wall 15 and the front wall 16 face, in particular directly, communicating portions of a volume, for example habitable, of the cockpit 4, when the steering assembly 10 is in the retracted configuration with the control portion 14 in the rest configuration.

Preferably, in the retracted configuration with the control portion 14 in the rest configuration, the steering wheel wall or the control portion 14 is arranged to define or form a bridge according to the pitch axis Y between the side walls 3a, 3b; the bridge or the steering wheel wall has wall ends 15a, 15b opposite each other according to the pitch axis Y and arranged close to the side walls 3a, 3b (or more generally the wall unit or the fascia 5) or flush with the side walls 3a, 3b (or more generally with the wall unit or the fascia 5).

In other words, the bridge substantially constitutes or forms (at least to the eye, in particular the human eye) a panel or a crosspiece that connects the side walls 3a, 3b to each other, thereby extending across the entire width of the cockpit 4 according to the pitch axis Y between the side walls 3a, 3b.

More specifically, the wall ends 15a, 15b are arranged close to and/or flush with and/or in continuity with the delimitation portions 8.

For example, in the retracted configuration with the control portion 14 in the rest configuration, the delimitation portions 8 have longitudinal ends 8b (according to the roll axis X) axially inserted in the holes 22 (Figure 7 shows only one of the ends 8b inside the relative hole 22). In this manner, the delimitation portions 8 contribute to supporting the control portion 14 in the rest configuration and/or more in general the steering assembly 10 in the retracted configuration, in particular according to the yaw axis Z.

More generally, at least one of the steering assembly 10 or the steering wheel 12 and the wall unit comprises securing means or a securing assembly configured to secure (or supporting means or a supporting assembly configured to support), in a releasable manner, the control portion 14 with respect to the wall unit with the steering assembly 10 in the retracted configuration.

For example, the just mentioned securing assembly or supporting assembly can comprise the ends 8b and the holes 22, just as it can comprise the mechanism 30, as it will be clearer in the following.

Therefore, more generally, the just mentioned securing assembly or supporting assembly can comprise a seat (herein, for example defined by one of the holes 22) on one of the outer casing 11 or the steering wheel 12 and the wall unit, therefore the seat is engaged in the rest configuration of the control portion 14 and in the retracted configuration of the steering assembly 10 by an engagement portion (herein, for example defined by one of the ends 8b) of the other of the outer casing 11 or the steering wheel 12 and the wall unit. The engagement portion can be considered part of the securing assembly or supporting assembly.

Clearly, the just mentioned securing assembly or supporting assembly can comprise various types of coupling devices and interfaces, for example including hooks and relative slots, magnetic portions magnetically cooperating with one another in a releasable manner, releasable snap couplings, releasable tear-away adhesive couplings (e.g. with Velcro), etcetera.

Conveniently, but not necessarily, the mechanism 30 can be configured or controllable to allow a disengagement between the seat and the engagement portion, in particular during a reconfiguration or passage of the steering assembly 10 from the retracted configuration to the extracted configuration. In a specular and independent manner, the mechanism 30 could be configured to guide and/or accompany the engagement between the seat and the engagement portion, in particular during a reconfiguration or passage of the steering assembly 10 from the extracted configuration to the retracted configuration. More generally, the mechanism 30 could be configured to place the securing assembly or supporting assembly in operation or cause said securing assembly or supporting assembly to operate and/or to control the release of the securing assembly or supporting assembly.

Preferably, the steering assembly 10 is housed, more preferably entirely, in the alcove 7b when the steering assembly 10 is in the retracted configuration, in particular with the control portion 14 also in the rest configuration.

Preferably, the motor vehicle 1 can comprise lighting means, namely one or more lighting devices 27 configured to emit light in the cockpit 4 towards the driver through the through channel 20 of the control portion 14 when, but not necessarily every time, the steering assembly 10 is in the retracted configuration and the control portion 14 is in the rest configuration.

For example, one of the lighting devices 27 could coincide with the lighting device 25; alternatively or additionally, another of the lighting devices can be arranged outside the channel 20, in particular at the front with respect to the channel 20, more in particular at the alcove 7b, for example in a fixed position and supported by the cockpit walls 3 or the wall unit, to emit the light in a through manner through the entire channel 20 towards the driver. Another lighting device 27 could backlight the display 24, so that this can show images.

For example, alternatively or additionally, in the retracted configuration of the steering assembly 10, with the control portion 14 in the rest configuration, the light guide 68 is substantially arranged in continuity with or close to or flush with one or more preferably two (in this case, the light guide 68 is arranged centrally between the two, according to the axis Y) further light guides 69 exposed in the cockpit 4 at the side walls 3a, 3b or the fascia 5 or more generally the wall unit, so as to form with the light guides 69 a luminous strip along a curve, in particular of a plane parallel to the plane of the axes X, Y), for example with a parabolic shape, in particular towards the back of the motor vehicle 1. The light guides 69, if present, can be part of a further lighting device configured to emit light towards the driver in the cockpit 4 through the light guides 69.

Preferably, the motor vehicle 1 or the steering assembly 10 comprises an arm structure 31 coupled to and more specifically hung to the outer casing 11.

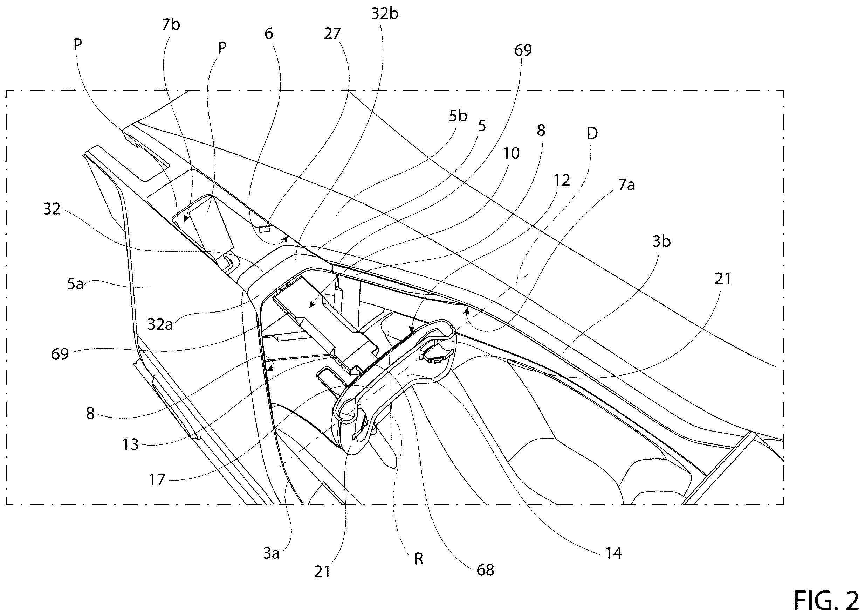

The arm structure 31 carries a plate end or panel end 32, which is arranged flush with the wall unit when the steering assembly 10 is in the extracted configuration (Figures 1A, 2), especially but not necessarily with the control portion 14 in the use configuration.

With the steering assembly 10 in the extracted configuration, the plate end 32 replaces the steering wheel wall described above, which is moved elsewhere by or due to the reconfiguration of the steering assembly (10) from the second to the first configuration. In this manner, the plate end 32 appears integrated with the wall unit or blends in with the wall unit.

Therefore, what already set forth concerning the relative arrangement between the steering wheel wall and the wall unit and/or the delimitation portions 8 and/or the cavity 6 or the opening 7, with the steering assembly 10 in the retracted configuration, is individually (characteristic by characteristic, one independent of the other) applicable to the relative arrangement between the plate end 32 and the wall unit and/or the delimitation portions 8 and/or the cavity 6 or the opening 7, with the steering assembly 10 in the extracted configuration.

In other words, the steering wheel wall in the rest configuration of the control portion 14 and in the retracted configuration of the steering assembly 10 can be replaced in the previous parts of the description by the plate end 32 when the steering assembly 10 is in the extracted configuration.

Therefore, for example, in a non-exhaustive manner, in the extracted configuration of the steering assembly 10, the plate end 32 can: be arranged close to and/or in continuity with the wall unit; rest against the wall unit and/or be supported by the wall unit and/or be in contact with the wall unit; be arranged such that an empty space between the plate end 32 and the wall unit does not exist; connect with substantial continuity to the wall unit; close at least one portion or the entire cavity 6 or opening 7; have a shape complementary, at least along one dimension according to a direction parallel to the pitch axis Y, to the closed portion of the cavity 6 or opening 7; etcetera, with possible reference to the previous relative parts of the description replacing the steering wheel wall with the plate end 32.

Alternatively or additionally, the plate end 32 is arranged, in the extracted configuration of the steering assembly 10, to define or form a bridge according to the pitch axis Y between the side walls 3a, 3b; also here, the bridge or the plate end 32 has opposite ends 32a, 32b according to the pitch axis Y and arranged close to the side walls 3a, 3b (or more generally the wall unit or the fascia 5) or flush with the side walls 3a, 3b (or more generally the wall unit or the fascia 5).

Also here, the bridge substantially constitutes or forms (at least to the eye, in particular the human eye) a panel or a crosspiece that connects the side walls 3a, 3b to each other, therefore extending across the entire width of the cockpit 4 according to the pitch axis Y between the side walls 3a, 3b.

More specifically, the ends 32a, 32b are arranged close to and/or flush with and/or in continuity with the delimitation portions 8.

For example, independently with respect to the cooperation between the control portion 14 and the ends 8b, the ends 32a, 32b cooperate in a releasable manner with the ends 8b (longitudinal ends of the delimitation portions 8) by friction and/or magnetic attraction. In the latter case, at least one of one of the ends 8b and the relative one of the ends 32a, 32b has a magnet (not illustrated) to attract the other one, herein comprising a material adapted to be attracted by the magnet. In this manner, the delimitation portions 8 contribute to supporting the plate end 32 and/or more in general the steering assembly 10 in the extracted configuration, in particular according to the yaw axis Z.

More generally, at least one of the steering assembly 10 or the plate end 32 and the wall unit comprises securing means or a securing assembly configured to secure (or supporting means or a supporting assembly configured to support), in a releasable manner, the plate end 32 to the wall unit when the steering assembly 10 is in the extracted configuration, such that the steering wheel 12, for example with the control portion 14 in the use configuration, or the steering assembly 10 is at least partially supported in position by means of the plate end 32 secured to the wall unit or supported by the wall unit.

For example, the just mentioned securing assembly or supporting assembly can comprise the ends 32a, 32b cooperating with the ends 8b, as well as in particular the magnet, just as it can comprise the mechanism 30, as it will be clearer in the following.

More generally, the just mentioned securing assembly or supporting assembly can comprise various types of coupling devices and interfaces, for example including hooks and relative slots, magnetic portions magnetically cooperating with one another in a releasable manner, releasable snap couplings, releasable tear-away adhesive couplings (e.g. with Velcro), etcetera. Alternatively or additionally, the just mentioned securing assembly or supporting assembly can comprise a seat on one of the outer casing 11 or the plate end 32 and the wall unit, as it can comprise an engagement portion being part of the other of the outer casing 11 or the plate end 32 and the wall unit to engage the seat, in a manner similar to the non-limiting example of the holes 22 and the ends 8b.

Unlike the steering wheel wall, specifically, the plate end 32 has a crescent or boomerang shape; more precisely the plate end 32 has according to a direction on a plane parallel to the plane defined by the axes X, Z, a concave recess 32c towards the rear of the motor vehicle 1 or towards the driver according to the roll axis X.

Preferably, in the retracted configuration of the steering assembly 10, the end 32 is hidden under the wall unit, i.e. the wall unit covers the end 32 from above, in particular inside the alcove 7b.

In general, the arm structure 31 could also be a single rigid arm, but in the specific case it rather comprises an articulated mechanism or robotic arm, in particular of the serial kinematic type, having the casing 11 as base and the plate end 32 as an appendage or more precisely as end-effector.

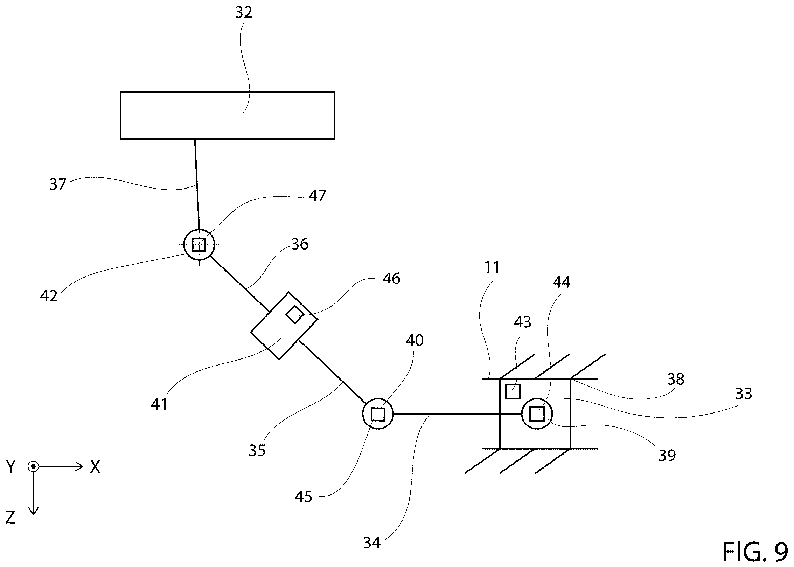

The robotic arm comprises a plurality of links 33, 34, 35, 36, 37 and a plurality of joints 38, 39, 40, 41, 42, of which each of the joints 38, 39, 40, 41, 42 connects one of the links 33, 34, 35, 36, 37 to a corresponding one of the plate end 32, the outer casing 11, and another of the links 33, 34, 35, 36, 37, in particular according to the diagram in Figure 9, to which reference is made for the details that will not be described as they can be directly inferred from Figure 9 according to the theory of the serial robotic arms.

Specifically, the robotic arm is a planar mechanism, namely the admissible movements of its links 33, 34, 35, 36, 37, as well as of the plate end 32 can be represented on a plane, specifically a plane parallel to the plane defined by the axes X, Z.

The plate end 32 in particular has three degrees of freedom controllable by means of the joints 38, 39, 40, 41, 42, more in particular defined by a translation according to a direction parallel to the roll axis X, a translation according to a direction parallel to the yaw axis Z, and a rotation about an axis parallel to the pitch axis Y.

The position or configuration of the joints 38, 39, 40, 41, 42 determines the pose, namely the position (in this case on the plane) and the orientation (in this case, the angular position about the axis Y) of the plate end 32.

The position or configuration of some or all of the joints 38, 39, 40, 41, 42 can be controlled, for example, by means of respective actuators 43, 44, 45, 46, 47. In other cases, one of the actuators 43, 44, 45, 46, 47 could control multiple joints of the joints 38, 39, 40, 41, 42, optionally in a manner dependent on one another.

The actuators 43, 44, 45, 46, 47 are schematically indicated at the relative joints 38, 39, 40, 41, 42, but could be located differently and anyway coupled to the relative joints 38, 39, 40, 41, 42 for their control by means of suitable transmissions, for example as it normally occurs in the sector of robotic arms.

In this manner, the pose (in this case on the plane) of the plate end 32 is completely adjustable by means of one or more of the actuators 43, 44, 45, 46, 47.

Therefore, the plate end 32 can reach the relative arrangement described above with respect to the wall unit, when the steering assembly 10 is in the extracted configuration, by means of the joints 38, 39, 40, 41, 42 and more in particular by means of their control by means of one or more of the actuators 43, 44, 45, 46, 47.

In particular, independently of each other, the joints 38, 41 are prismatic joints, which in particular enable, respectively: a relative translation between the link 33 (in practice, a slider) and the outer casing 11 along a first direction of translation; and a relative translation between the links 35, 36 (in practice, parallel rods) along a second direction of translation.

More in particular, the first direction of translation is fixed with respect to the outer casing 11 and directed specifically parallel to the roll axis X.

Preferably, independently of one another, the joints 39, 40, 42 are rotary joints (namely hinges), which enable relative rotations about respective hinge axes parallel to the pitch axis Y between the links 33, 34, the links 34, 35, and the links 36, 37, respectively.

For the purpose of controlling the rotation of the plate end 32, the joints 39, 40, 42 are redundant, therefore even only one or two of them could be controlled, while the others could also be locked in respective reference positions.

The link 37 is specifically fixed to the plate end 32.

Based on the foregoing, it is clear that the arm structure 31 can be part of the securing assembly or the supporting assembly for the plate end 32.

Returning now to the details of the mechanism 30, advantageously, the mechanism 30 is of the articulated type.

The mechanism 30 is advantageously configured or controllable to reconfigure the steering assembly 10 between the extracted configuration and the retracted configuration at least by moving the outer casing 11 between a first pose (i.e. position plus orientation) and a second pose, namely an extracted pose and a retracted pose, respectively corresponding to the extracted configuration and the retracted configuration.

In particular, the mechanism 30 is configured to suspend or support the outer casing 11 with respect to the cockpit walls 3 in a floating manner between the first and second poses with multiple degrees of freedom, in particular of the outer casing 11 with respect to the cockpit walls 3.

More in particular, the degrees of freedom allow or must allow at least one translation of the outer casing 11, for example to pass from one to the other of the first and second poses, along a curve.

For clarity, translation means an isometry, according to which all the points of a component move by a fixed distance in the same direction.

The expression "curve" is understood herein in the sense of curved profile, or a curve having at least one point with non-zero curvature, namely more simply a curve with non-zero curvature. Therefore, a straight line is excluded from the meaning of the expression "curve", since all the points of the straight line have zero curvature. Whereas, a polygonal line can fall within the expression "curve", even if it is not specifically a curved profile; in fact, the polygonal line has at least one corner point, which has an undefined but anyway non-zero curvature.

The curve or optionally the polygonal line belongs to a vertical translation plane, namely parallel to a plane defined by the axes X, Z.

Preferably, the degrees of freedom allow, during the translation of the outer casing 11 along the aforementioned curve, also a rotation of the outer casing 11 about an axis of rotation parallel to the axis Y.

In particular, the translation, more in particular from the extracted configuration to the retracted configuration or vice versa can comprise a descent (namely a variation in the height from top to bottom according to the axis Z) of the outer casing 11 from the starting configuration (one of the extracted and retracted configurations), an advance or a reverse movement (namely a variation in the position according to the axis X) of the outer casing 11, and an ascent or rise (namely a variation in the height from bottom to top according to the axis Z) of the outer casing 11 to or up to the reaching of the arrival configuration (the other of the extracted and retracted configurations).

Preferably, the mechanism 30 comprises at least one and specifically two or more (in particular exactly two) guides 50 fixed with respect to the cockpit walls 3, for example obtained on the cockpit walls 3, and in particular fixed with respect to the side walls 3a, 3b and more in particular obtained on the side walls 3a, 3b, specifically respectively.

The mechanism 30 further comprises for each of the guides 50 a corresponding slider 51 slidable on the relative guide 50 along a translation path defined by the guide 50 for the slider 51.

The mechanism 30 is configured to suspend or support, namely suspends or supports the outer casing 11 or more generally the steering assembly 10 on the present sliders 51.

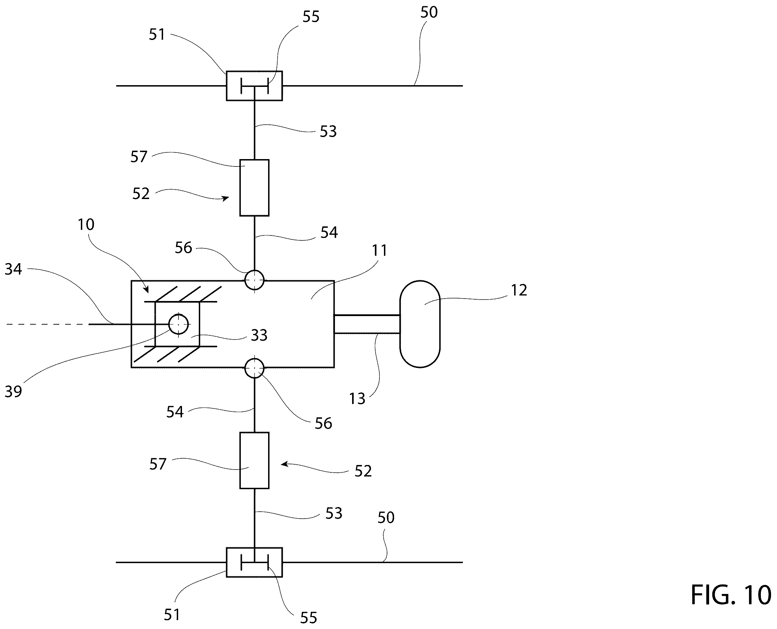

In particular, the mechanism 30 (the diagram of which is shown in Figure 10) comprises at least one and specifically two or more (in particular exactly two) kinematic chains 52 configured to suspend (support) or suspending (supporting) the outer casing 11 or the steering assembly 10 on the present sliders 51, in particular respectively.

More generally, the kinematic chains 52 could also suspend or support, in other embodiments, the outer casing 11 or the steering assembly 10 on the cockpit walls 3 or more precisely on the side walls 3a, 3b, (in particular directly), instead of on the sliders 51, which could therefore be absent.

Therefore, the mechanism 30 could in general be of the parallel kinematic type, since in particular comprising multiple kinematic chains 52 to suspend or support the outer casing 11 or the steering assembly 10, thereby defining in particular the movable platform of the mechanism 30, with respect to the cockpit walls 3 or the side walls 3a, 3b, thereby defining in particular the fixed platform of the mechanism 30.

In particular, the kinematic chains 52 are of the serial kinematic type and are more in particular composed of or formed by a plurality of links and joints.

The mechanism 30 can be configured to control the degrees of freedom (and in particular the translation on the plane parallel to the plane of the axes X, Z and/or the rotation about the axis parallel to the axis Y) of the outer casing 11 or of the steering assembly 10, in particular in a partial or also total manner.

In fact, the mechanism 30 could also enable the driver to contribute to the manoeuvring of the outer casing 11, for example by applying forces and torques on the outer casing 11 by means of the steering wheel 12 or the control portion 14.

In other words, the mechanism 30 can be configured to adjust a compliance or stiffness thereof in response to external actions (for example coming from the driver) applied to the outer casing 11 or more generally to the steering assembly 10. This could for example be implemented by means of impendence control algorithms, possibly also of the known type, in particular in the sector of the interaction between humans and robotic manipulators.

One or more degrees of freedom (which are generally six in total) of the outer casing 11 or the steering assembly 10 could even be independent of, namely not controlled by, the mechanism 30, therefore left free to the total control of the driver. In these cases, however, the mechanism 30 would have the function of limiting the movements of the outer casing 11 or the steering assembly 10, i.e. of defining the workspace of the outer casing 11 or the steering assembly 10.

Preferably, the mechanism 30 completely controls all the degrees of freedom of the outer casing 11 or the steering assembly 10. Therefore, it is clear that the mechanism 30 can be part of the securing assembly or supporting assembly for the control portion 14 with respect to the wall unit.

Preferably, one, some or all (specifically both) of the kinematic chains 52 each comprise two rods 53, 54 (of which for example at least one or both are straight) along respective axes, a rotary joint 55, a spherical joint 56, and a prismatic joint 57 that connects or couples the two rods 53, 54, in particular such that the rod 54 can translate with respect to the rod 53 along the axis of the rod 53.

One of the rotary joint 55 and the spherical joint 56 (preferably, the rotary joint 55) couples or connects the rod 53 to one of the sliders 51. The other of the rotary joint 55 and the spherical joint 56 (preferably, the latter) couples or connects the rod 54 to the outer casing 11.

In general, the coupling between the outer casing 11 and the mechanism 30 could be indirect or direct; for example, the mechanism 30 could suspend the outer casing 11 by means of the plate end 32 or any other component of the robotic arm or arm structure 31, being for example directly coupled to the plate end 32 or to said any component.

More specifically, the other of the rotary joint 55 and the spherical joint 56 (preferably, the latter) could couple or connect the rod 54 to the plate end 32 or to said any component.

When the rotary joint 55 couples the rod 53 to the slider 51, the same rotary joint 55 could be replaced by a fixing of the rod 53 to the slider 51, namely by a fixing joint. This would decrease the degrees of freedom of the kinematic chain 52 and thus of the outer casing 11, while not eliminating the degrees of freedom sufficient for performing the translation along the curve on the plane parallel to the plane of the axes X, Z and preferably the rotation about the axis parallel to the axis Y. In this case, it is convenient that the rod 54 is not connected to the outer casing 11 at an axis parallel to the axis Y and passing through the centre of gravity of the outer casing 11. In this manner, it is possible to continue to ensure the rotation about the axis parallel to the axis Y.

The rotary joint 55 is replaceable by a further spherical joint 56; in this case, the degrees of freedom of the kinematic chain 52 would increase.

The rotary joint 55 enables a rotation of one of the links with respect to the other of the links about a hinge axis. Preferably, the latter hinge axis has at least one component parallel to the axis Y or more preferably is parallel to the axis Y.

The spherical joint 56 enables all possible relative rotations (about three orthogonal axes and respectively parallel to the axes X, Y, Z) between the links.

Preferably, the prismatic joint 57 comprises an elastic device (specifically a spring 60) and/or a shock absorber to couple the rod 54 to the rod 53, so that the relative translation movement between the rods 53, 54, occurs against the elastic and/or damping reaction of the elastic device and/or the shock absorber, respectively.

For example, the positions of the slider 51, of the rotary joint 55, and of the prismatic joint 57 are controlled by respective actuators (not illustrated) of the mechanism 30; in particular, this could be valid for each kinematic chain 52. Optionally, also the position of the spherical joint 56 could be controlled by one or more actuators (not illustrated) of the mechanism 30.

Preferably, the mechanism 30 further comprises cover plates 61 respectively coupled to the kinematic chains 52 to cover at least partially the same kinematic chains 52 (in particular, the rods 53, 54) from above or more simply at least partially covering the kinematic chains 52 (in particular, the rods 53, 54) from above.

In particular, each cover plate 61 is coupled to the relative kinematic chain 52, in particular to a coupling rod between the rods 53, 54, more specifically the rod 53, in a movable manner (for example slidable on the coupling rod, in particular along the relative axis and/or tilting about the coupling rod, in particular about the relative axis or a longitudinal axis of the plate 61 parallel to the axis of the rod), for example with respect to the coupling rod, between a first and a second position.

The cover plate 61 is carried by the kinematic chain 52, more in particular by one of its links, in a movable manner with respect to the latter.

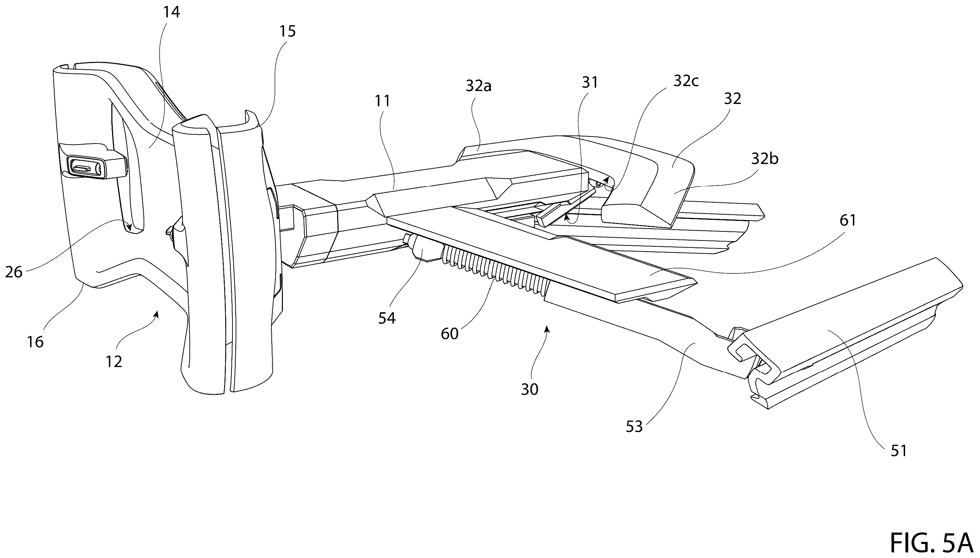

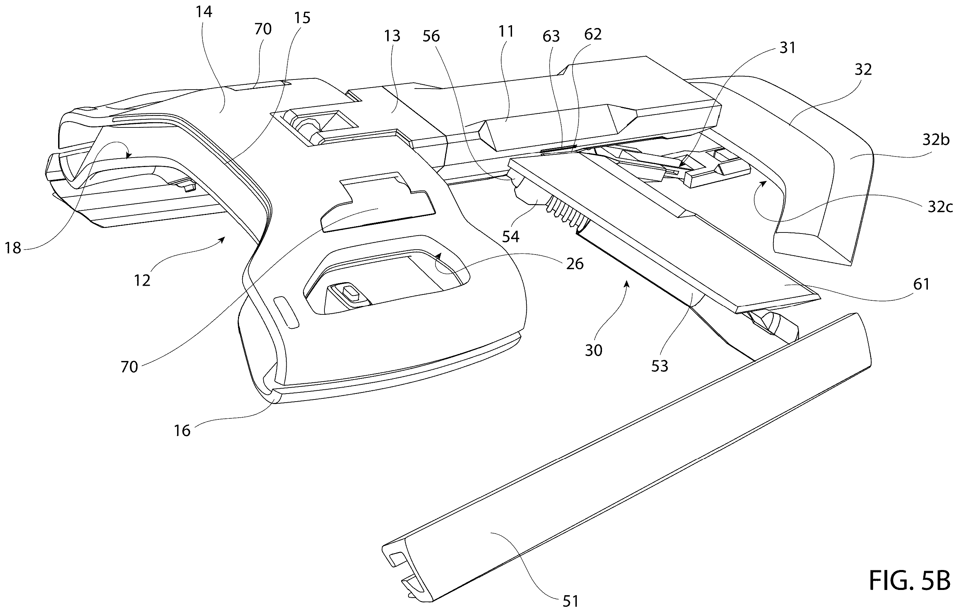

In the first position and in the second position, respectively, an end 62 (Figure 5B) of the cover plate 61 engages and disengages with a corresponding coupling interface 63 of the outer casing 10.

In particular, the end 62 is defined by a tooth that positively engages in the first position a corresponding seat obtained on the outer casing 10 and defining the coupling interface 63. In the second position, the tooth is out of the seat.

For example, the cover plates 61 are arranged in the first and second positions respectively when the steering assembly 10 is in the extracted configuration and in the retracted configuration.

For example, the mechanism 30 comprises respective sub-mechanisms configured or controlled to move the cover plates 61 with respect to the relative kinematic chains 52 in the first and second positions, respectively when the steering assembly 10 is in the extracted configuration and in the retracted configuration.

Preferably, the cover plates 61 in the first position are arranged so as to protrude with respect to the side walls 3a, 3b, respectively, according to respective diagonal or inclined directions with respect to the roll axis X up to ending at the outer casing 10.

In particular, in the first position, the ends of one or each of the cover plates 61 according to the relative diagonal direction have the end closer to the outer casing 10 which is further back than the other end (closer to one of the side walls 3a, 3b) according to the roll axis X.

The cover plates 61 are completely independent of the particular construction of the relative kinematic chains 52, therefore the specific characteristics of the kinematic chains 52 are not limiting for the characteristics of the cover plates 61.

Advantageously, the steering wheel 12 comprises one or more precisely two control paddles 70 to control a function of the motor vehicle 1, in particular comprising or defined by a gear shift or gear selection of a gearbox (not illustrated) of the motor vehicle 1. For example, one of the control paddles 70 is operable to control the engagement of a higher gear with respect to the current one, whereas the other of the control paddles 70 is operable to control the engagement of a lower gear with respect to the current one.

The back wall 15 preferably defines a guide 71 for each control paddle 70; the steering wheel 12 comprises for each guide 71 a slide 72 slidable on the relative guide 71 along a sliding direction transversal or more in particular radial with respect to the steering wheel axis A in the use configuration between an extraction position and an insertion position (in general a first and a second position).

In particular, the guides 71 are arranged symmetrically with respect to the steering wheel axis A.

The control paddles 70 are hinged respectively to the slides 72 about respective pivot axes K orthogonal to the sliding direction and transversal to the steering wheel axis A in the use configuration.

Preferably, the pivot axes K are parallel to the direction R and/or transversal or more precisely orthogonal to the direction D.

Furthermore, the back wall 15 defines for each control paddle 70 a relative seat or pocket 73, which communicates for example with the relative guide 71, in particular in the sense that the guide 71 is accessible through the seat 73, more in particular by means of an opening of the guide 71 directly communicating or shared with the seat 73 or directly exposed on the seat 73.

The seat 73 is in particular a tunnel or an interspace hollowed internally (more in particular in a radial direction with respect to the steering wheel axis A in the use configuration) the back wall 15.

For example, the seat 73 begins with a cutout 74 (i.e. it has an inlet opening defined by the cutout 74) on the back wall 15 or communicates with the outside of the steering wheel 12 by means of the cutout 74.

In particular, the seat 73 has a bottom 75 inside the back wall 15, for example being part of the back wall 15, and having at least one portion axially (i.e. according to the steering wheel axis A in the use configuration) facing another (axially opposite) portion of the back wall 15 or more precisely an inner face 76 of the back wall 15. Furthermore, for example, a portion of the bottom 75 axially faces the cutout 74.

In other words, the interspace defined by the seat 73 axially extends between the inner face 76 and the bottom 75.

The inner face 76 is axially opposite (according to the thickness of the back wall 15) an outer surface or face 77 of the back wall 15.

The control paddles 70 can be dragged by the slides 72 along the sliding directions of the guides 71, in particular at least partially inside the seats 73, respectively.

In the insertion position of each slide 72, the relative control paddle 70 is at least partially inserted in the corresponding seat 73 and has a first face 70a facing the bottom 75 or on the bottom 75, as well as a second face 70b opposite the face 70a axially (according to the steering wheel axis A in the use configuration) or according to the thickness of the control paddle 70.

The face 70b in the insertion position of the relative slide 72 has at least one portion 70c which is arranged flush with the outer surface 77, so that the portion 70c appears integrated with or blends in with the back wall 15, in particular with a similar meaning to what already discussed in relation to the relative arrangement between the plate end 32 or the steering wheel wall with the wall unit (all the considerations already made can apply herein by replacing the wall unit with the back wall 15 or the outer surface 77, as well as the plate end 32 or the steering wheel wall with the portion 70c). With the portion 70c removed, a possible further portion 70d (for example, the remaining part) of the face 70b is arranged inside the seat 73 and hidden by the back wall 15. In other words, namely alternatively or additionally, the control paddle 70 is partially inserted in the seat 73 and partially flush with the back wall 15 or its outer surface 77.

Herein, the portion 70c is directly exposed to the outside of the steering wheel 12, in particular axially.

The portion 70c is in particular the radially outermost portion of the face 70b. Alternatively or additionally, the portion 70d is in particular the radially innermost portion of the face 70b. Herein, the expression radially refers to the steering wheel axis A in the use configuration.

The portion 70c closes or covers at least a part of the cutout 74; in other words, the portion 70c is arranged in continuity with the contours of the cutout 74, namely an empty (free) space between the portion 70c and the adjacent part of the contours of the cutout 74 does not exist. For example, the portion 70c connects, in particular seamlessly or with substantial continuity (at least to the eye, in particular the human eye) to the contours of the cutout 74. Alternatively or additionally, the portion 70c has a shape complementary to the closed or covered part of the cutout 74.

In the insertion position of the slide 72, the control paddle 70 could rest against the back wall 15 or be in contact with the back wall 15, at least at the portion 70c.

According to an alternative, the face 70b is completely arranged flush with the outer surface 77, so that the face 70b appears integrated with or blends in with the back wall 15, in particular with meanings similar to what already seen in the foregoing, more in particular for the portion 70c. In other words, the portion 70c extends to the entire face 70b, therefore what already set forth for the portion 70c can apply to the face 70b in this alternative. Here, the entire face 70b is directly exposed to the outside of the steering wheel 12, in particular axially.

In these cases, the control paddle 70 generally closes or covers or occupies at least partially (in particular, approximately all of) the seat 73 and in particular the cutout 74. The shape of the control paddle 70 can be substantially complementary to that of the cutout 74.

Preferably, when the face 70b is completely arranged flush with the outer surface 77, the face 70b completely closes or covers or occupies the seat 73 and in particular the cutout 74. The shape of the control paddle 70 can be (completely) complementary to that of the seat 73. Also here, the face 70b is arranged at the cutout 74; in particular, an empty (free) space between the face 70b and the contours of the cutout 74 does not exist, therefore the face 70b is arranged close to the contours of the cutout 74 substantially in continuity with the contours of the cutout 74.

According to another alternative, the entire face 70b is completely or entirely inside the seat 73 and hidden by the back wall 15. Also here, the control paddle 70 can cover or close the seat 73 and in particular the cutout 74, more in particular by means of a face transversal to both faces 70a, 70b. Here, the transversal face is directly exposed outside the steering wheel 12, in particular radially.

In practice, in all the examples described above, the control paddle 70 substantially acts as an extractable drawer of the back wall 15.

In the extraction position of the slides 72, the control paddles 70 are at least partially extracted from the relative seats 73 and respectively free to rotate (independently of each other) about respective pivot axes K, in particular towards the front wall 16.

By rotating, in particular towards the front wall 16, in the extraction position of the slides 72, the control paddles 70 control or operate their function, in particular in response to the respective rotations of the control paddles 70 about the relative pivot axes K, in particular towards the front wall 16.

In other words, in particular, the control paddles 70 are configured to control their function in response to a rotation of the control paddles 70 according to a specific rotation direction or control rotation direction.

In general, by means of the slides 72, the control paddles 70 have a concealed configuration (corresponding to the insertion positions of the slides 72), in which they are close to the back wall 15 or integrate with the back wall 15 or camouflage with the back wall 15 or are arranged flush with the back wall 15, and an extracted configuration (corresponding to the insertion positions of the slides 72), in which they free at least partially or completely the seats 73 (in particular making the cutouts 74 on the back wall 15 visible) and can be used to carry out their function by means of their rotation (which becomes performable in the extracted configuration), in particular towards the front wall 16.

Preferably, in the insertion position of the slides 72, the control paddles 70 are at least partially sandwiched axially (according to the steering wheel axis A in the use configuration) between the back wall 15 or the inner faces 76 and the respective bottoms 75 of the seats 73.

In particular, a clearance or space axially present between the bottoms 75 and the relative axially opposite portions (opposite the bottoms 75) of the back wall 15 is such as to limit or prevent (as it is sufficiently narrow) the rotation of the control paddles 70 in the insertion positions of the slides 72 according to at least one rotation direction about the pivot axes K (especially the one towards the bottoms 75 or the front wall 16, namely the one for controlling the function) or more preferably in both rotation directions about the pivot axis K.

Alternatively or additionally, for each of the control paddles 70, a relative arrangement between the control paddle 70 and at least one of the corresponding bottom 75 of the seat 73 and the relative axially opposite portion of the back wall 15 is such as to limit or prevent the rotation of the control paddle 70 in the insertion position of the slide 72 according to at least one rotation direction about the pivot axis K (especially the one towards the bottom 75 or the front wall 16, namely the one for controlling the function) or more preferably according to both rotation directions about the pivot axis K.

Conveniently, the steering wheel 12 further comprises for each control paddle 70 an elastic device 78 coupled to the relative slide 72 and to the control paddle 70. The elastic device 78 is preloaded to drive the relative control paddle 70 into rotation about the pivot axis K according to a rotation direction opposite the control rotation direction, i.e. the rotation direction for controlling the function of the control paddle 70. Therefore, in particular, the rotation of the control paddles 70 according to the control rotation direction occurs against the elastic reaction of the elastic devices 78.

Preferably, each control paddle 70 in the extraction position of the relative slide 72 has at least one end axially aligned with one of the slots 26.

Conveniently, the steering wheel 12 comprises actuators 79 configured to move respectively the slides 72 from the insertion position to the extraction position and vice versa.

Preferably, the steering wheel 12 can comprise one or more controls 80, in particular at the back wall 15, manoeuvrable by the driver to operate the actuators 79.

Conveniently, with the slides 72 in the respective insertion positions or in the respective extraction positions, the control paddles 70 and the slides 72 are arranged symmetrically with respect to the steering wheel axis A in the use configuration.

The number of the slides 72, just as of the actuators 79 and/or the controls 80 is not limiting, therefore it can be one, two, or more. The same is clearly valid for the guides 71 and the seats 73.

Based on the foregoing, the advantages of the motor vehicle 1 or the steering wheel 12 according to the invention are evident.

The control portion 14 can be stored in the rest configuration when not in use, so as to free space in the cockpit 4 for the passenger. This is particularly advantageous when the further cockpit is utilized by the driver to drive the motor vehicle 1.

The recess 18 on the control portion 14 is particularly attractive and can be illuminated and/or utilized to house the controls 23 or to show images to the driver by means of the display 24.

The possibility of the steering assembly 10 being floating is particularly revolutionary and enables the steering assembly 10 to be moved into the alcove 7b when not in use.

Hinging the control portion 14 on the steering wheel shaft 13 is a particularly simple and effective manner to reduce the perceived bulk of the control portion 14 and provide the passenger with a tidier environment in the cockpit 4.

Similarly, the insertion position of the slides 72 leads the control paddles 70 to integrate with the back wall 15, so that the overall stylistic lines of the steering wheel 12 are cleaner and tidier, especially when the control portion 14 is placed in the rest configuration.

Finally, it is clear that modifications and variations can be made to the motor vehicle 1 or steering wheel 12 according to the invention which anyway do not depart from the scope of protection defined by the claims.

In particular, the number and the shape of each of the described and illustrated components could be different.

Furthermore, the various described and/or illustrated embodiments can be combined with one another without any limitations, with particular reference to the various characteristics described individually in the various paragraphs of the description. Each of such characteristics is independently applicable to each of the described embodiments.

## Claims

1. Steering wheel (12) for a motor vehicle (1), the steering wheel having
- a steering wheel shaft (13) extending along a steering wheel axis (A) and configured to be coupled to an outer casing (11) of a steering assembly (10) of the motor vehicle in a rotatable manner about the steering wheel axis (A) with respect to the outer casing (11),
- a control portion (14) manoeuvrable by a driver of the motor vehicle (1) and coupled to the steering wheel shaft (13) so as to have at least one use configuration with respect to the steering wheel shaft (13), the control portion (14) being rotatable to drive the steering wheel shaft (13) into rotation about the steering wheel axis (A) in the use configuration to steer the motor vehicle (1) when the steering wheel shaft (13) is coupled to said outer casing (11) in a rotatable manner about the steering wheel axis (A) and the steering assembly (10) is in a configuration suitable to be operated to steer the motor vehicle (1) by means of a rotation of the control portion (14) about the steering wheel axis (A),
- a control paddle (70) to control a function of the motor vehicle,
wherein the control portion (14) is axially delimited, in the use configuration, between a back wall (15) and a front wall (16) opposite each other according to the steering wheel axis (A), the back wall (15) being arranged to be closer than the front wall (16) to the outer casing (11) according to the steering wheel axis (A) when the steering wheel shaft (13) is coupled to said outer casing (11) in a rotatable manner about the steering wheel axis (A),
**characterized by** comprising a slide (72) slidable between at least a first and a second position on a guide (71) defined by the back wall (15) along a sliding direction transversal or radial with respect to the steering wheel axis (A) in the use configuration of the control portion (14), the control paddle (70) being hinged to the slide (72) about a pivot axis (K), wherein the control paddle (70) in the first position of the slide (72) is at least partially inserted in a seat (73) of the back wall (15) and has in the use configuration of the control portion (14)
- a first face (70a) facing a bottom (75) of the seat (73) according to the steering wheel axis (A), and
- a second face (70b) opposite the first face (70a) according to a thickness of the control paddle (70) or the steering wheel axis (A) in the use configuration and having at least one part (70c) arranged flush with an outer surface (77) of the back wall (15), so as to appear integrated with or blend in with the back wall (15), as well as an optional further distinct part (70d) hidden by the back wall (15) inside the seat (73), the second face (70b) being alternatively entirely hidden by the back wall (15) inside the seat (73),
wherein the control paddle (70) in the second position of the slide (72) is at least partially extracted from the seat (73) and free to rotate about the pivot axis (K) to control said function in response to a rotation of the control paddle (70).

2. The steering wheel according to claim 1, wherein the control paddle (70) in the first position of the slide (72) is at least partially axially sandwiched between the bottom (75) of the seat (73), the bottom (75) of the seat (73) being a first portion of the back wall (15), and a second portion of the back wall (15) axially opposite the bottom (75) of the seat (73), wherein a clearance axially present between the bottom (75) of the seat (73) and the second portion of the back wall (15) is such as to limit or prevent the rotation of the control paddle (70) in the first position of the slide (72) according to at least one rotation direction about the pivot axis (K), or wherein a relative arrangement between the control paddle (70) and at least one of the bottom (75) of the seat (73) and the second portion of the back wall (15) is such as to limit or prevent the rotation of the control paddle (70) in the first position of the slide (72) according to at least one rotation direction about the pivot axis (K).

3. The steering wheel according to claim 2, wherein said clearance or relative arrangement is such as to limit or prevent the rotation of the control paddle (70) in the first position of the slide (72) in both rotation directions.

4. The steering wheel according to claim 1, wherein the second face (70b) is completely flush with the outer surface (77) of the back wall (15) in the first position of the slide (72), thereby closing or completely occupying the seat (73), so that the control paddle (70) has a shape complementary to that of the seat (73).

5. The steering wheel according to any of the preceding claims, further comprising an elastic device (78) coupled to the slide (72) and to the control paddle (70), the elastic device (78) being preloaded to drive the control paddle (70) into rotation about the pivot axis (K) according to a rotation direction opposite that for controlling said function.

6. The steering wheel according to any of the preceding claims, wherein the control portion (14) further comprises a through slot (26) from the front wall (16) to the back wall (15) along a direction (F) parallel to the steering wheel axis (A) in the use configuration, the control paddle (70) in the second position of the slide (72) having at least one end axially aligned with said through slot (26).

7. The steering wheel according to any of the preceding claims, further comprising an actuator device (79) configured to move the slide (72) from the first position to the second position and vice versa.

8. The steering wheel according to claim 7, comprising at least one control (80) at the back wall (15), the control (80) being manoeuvrable by a driver of the motor vehicle (1) to operate the actuator device (79).

9. The steering wheel according to any of the preceding claims, wherein said function is a gearshift of a gearbox of the motor vehicle (1).

10. A motor vehicle (1) comprising a steering assembly (10) having an outer casing (11) and a steering wheel (12) according to any of the preceding claims with said steering wheel shaft (13) coupled to the outer casing (11) in a rotatable manner about the steering wheel axis (A).
